# EUROPÄISCHE PATENTSCHRIFT

(11) **EP 3 318 736 B1**
(45) Veröffentlichungstag und Bekanntmachung des Hinweises auf die Patenterteilung: **08.05.2019**
(21) Anmeldenummer: 17020520.7
(22) Anmeldetag: 03.11.2017
(51) Int. Cl.: F01N 11/00, F02D 41/14, F02D 41/24

(54) **VERFAHREN UND VORRICHTUNG ZUM BETREIBEN EINER BRENNKRAFTMASCHINE MIT EINER ABGASNACHBEHANDLUNG**
METHOD AND DEVICE FOR OPERATING A COMBUSTION ENGINE WITH AN EXHAUST TREATMENT SYSTEM
PROCÉDÉ ET DISPOSITIF DESTINÉS AU FONCTIONNEMENT D'UN MOTEUR À COMBUSTION INTERNE DOTÉ D'UN DISPOSITIF DE TRAITEMENT FINAL DES GAZ D'ÉCHAPPEMENT

(30) Priorität: 07.11.2016 DE 102016121155
(43) Veröffentlichungstag der Anmeldung: 09.05.2018
(73) Patentinhaber: IAV GmbH, 10587 Berlin (DE)
(72) Erfinder: Berg, Peter, 30855 Langenhagen (DE); Bruhn, Sven, 38518 Gifhorn (DE); Behrendt, Stefan, 38118 Braunschweig (DE); Magnor, Olaf, 29392 Wesendorf (DE)
(74) Vertreter: Fukala, Georg

(56) Entgegenhaltungen:
- DE-A1-102014 016 447
- US-A- 5 018 348
- US-A- 5 220 788
- US-A1- 2004 083 720
- US-A1- 2005 188 680
- US-A1- 2007 251 213
- US-A1- 2014 338 312

## Beschreibung

Die vorliegende Erfindung betrifft ein Verfahren und eine Vorrichtung zum Betreiben einer Brennkraftmaschine mit einer Abgasnachbehandlung mit den Merkmalen der Patentansprüche.

Wie allgemein bekannt, erfolgt beim Betrieb von Brennkraftmaschinen eine Abgasnachbehandlung. So umfassen zum Beispiel Brennkraftmaschinen mit Fremdzündung einen Drei-Wege-Katalysator. Der Betrieb einer solchen Abgasnachbehandlungseinrichtung erfolgt bekanntermaßen in enger Verbindung mit einer so genannten Lambdaregelung. Die dabei verwendeten Lambdasonden dienen zur Bestimmung des Gemischzustandes. Zum Zweck einer Steigerung der Wirksamkeit der Abgasnachbehandlung wird eine Lambdamodulation angewendet, d. h. es erfolgt beim Betrieb der Brennkraftmaschine eine Variation des Verbrennungsluftverhältnisses. Die Gemischregelung erfolgt insbesondere auf Basis kaskadierter Regelkreise, wobei eine äußere Regelungsschale, die auch als Nachkatregelkreis bezeichnet wird, die Sollwerte innerer Regelungsstrukturen derart beeinflusst, dass das Regelziel der äußeren Reglerschale erreicht wird. Der Nachkatregelkreis ist folglich der Master in Hinsicht auf die Sollwertvorgabe der gesamten Struktur der Gemischregelung. Eine Parameterdrift der Kennlinie der nach dem Katalysator angeordneten Lambdasonde wird gemäß dem Stand der Technik regelmäßig nicht berücksichtigt. Von Nachteil ist es somit, dass Streuungen von Parametern eines nach dem Katalysator angeordneten Sensors im Serieneinsatz hinzunehmen sind. Praktisch erfolgt die Vorgabe eines Sollwertes für den Nachkatregelkreis im Rahmen der Entwicklung, d. h. applikativ.

Gemäß dem Dokument DE102006059081A1 ist es Stand der Technik, bei einem Verfahren zur Katalysatordiagnose einer Abgasreinigungsanlage, eine Variation des Signals einer Sonde hinter einem Katalysator auszuwerten und zu Adaptionszwecken zu verwenden, beispielsweise zur Anpassung der Regelparameter für eine Optimierung der Nachkatregelung. Dabei kann ein Vergleich einer Variation des Signals der betreffenden Sonde mit einem Katalysatormodell oder mit einem applizierbaren Wert erfolgen. Die Verwendung von Modellen ist regelmäßig aufwendig und nicht robust und entspricht einer Festlegung auf ein spezifisches System, das eine mit einem definierten Kraftstoff betriebene Brennkraftmaschine sowie ein definiertes Abgasnachbehandlungssystem aufweist.

Gemäß den Dokumenten US2004083720A1, US5220788A, US5018348A, US2007251213A1, US2014338312A1, US2005188680A1 oder DE102014016447A sind weiterhin Verfahren zum Bestimmen der Wirksamkeit eines Katalysators Stand der Technik, wobei Zeitverläufe von Signalen von Abgassensoren stromauf und stromab des Katalysators ausgewertet werden.

Es ist Aufgabe der vorliegenden Erfindung, den Betrieb einer Brennkraftmaschine derart zu gestalten, dass ohne viel Aufwand eine effektive, robuste und flexible Abgasnachbehandlung möglich ist.

Diese Aufgabe wird mit den Merkmalen der unabhängigen Patentansprüche gelöst. Vorteilhafte Weiterbildungen der Erfindung sind in den Unteransprüchen angegeben.

Diese Aufgabe wird erfindungsgemäß dadurch gelöst, dass beim Betrieb einer Brennkraftmaschine, bei der zum Zweck einer Erhöhung der Wirksamkeit der Abgasnachbehandlung eine Modulation des Verbrennungsluftverhältnisses erfolgt, also der Katalysator als Bestandteil der Abgasnachbehandlung mit einer sich ändernden Sauerstoffkonzentration im Abgas beaufschlagt wird und infolgedessen die Modulation des Verbrennungsluftverhältnisses auf dem Signal einer Lambdasonde stromab des Katalysators sichtbar ist, zunächst die Bestimmung einer Phasenverschiebung/Phasendifferenz zwischen einer Sollwertvorgabe für das Verbrennungsluftverhältnis, mit dem die Brennkraftmaschine betrieben wird oder einer die Sollwertvorgabe für das Verbrennungsluftverhältnis repräsentierenden Größe, und dem Signal der Lambdasonde stromab des Katalysators erfolgt. Im weiteren Verlauf erfolgt eine Bestimmung der Abhängigkeit dieser Phasenverschiebung vom Verbrennungsluftverhältnis, indem das Verbrennungsluftverhältnis variiert und jeweils die zugehörige Phasenverschiebung ermittelt wird. Anhand des so gewonnenen funktionalen Zusammenhanges zwischen Phasenverschiebung und Verbrennungsluftverhältnis kann das Verbrennungsluftverhältnis ermittelt werden, bei dem die Phasenverschiebung ein Maximum aufweist. In Abhängigkeit von diesem Maximum erfolgt dann bevorzugt die Bestimmung eines Sollwertes für das Verbrennungsluftverhältnis, mit dem die Brennkraftmaschine betrieben wird bzw. des Sollwertes, für den eingangs beschriebenen Nachkatregelkreis. Erfindungsgemäß entspricht dieser Sollwert insbesondere 80 % des Maximums der Phasenverschiebung im unterstöchiometrischen Bereich. Denkbar sind natürlich auch andere Sollwerte x, sofern diese sich an dem Maximum der Phasenverschiebung orientieren.

Mit anderen Worten ist es erfindungsgemäß von Vorteil, dass lediglich die Lambdasonde stromab des Katalysators notwendig ist, um den Punkt bzw. das Verbrennungsluftverhältnis zu bestimmen, bei dem die Abgasnachbehandlung besonders effektiv ist. Noch anders gesagt ist es mittels des erfindungsgemäßen Verfahrens möglich, quasi eine automatisierte Emissionsoptimierung von stöchiometrisch betriebenen Verbrennungskraftmaschinen unabhängig vom Katalysator durchzuführen. Vor allem ist keine aufwendige Abgasmesstechnik nötig. Das Verfahren ist sehr robust gegen Störungen in der Lambdamesskette, wie zum Beispiel Kennlinienverschiebungen durch Vergiftung, Alterung, Produktionsstreuungen, und/oder wechselnde Abgasmilieus, da nicht auf fest vorgegebene Spannungswerte einer nominalen Kennlinie einer Lambdasonde geregelt wird. Von Vorteil ist außerdem die erhöhte Betriebssicherheit, da übermäßige CO-Emissionen verhindert werden. Vorteilhaft ist auch ein vermindertes Gesundheitsrisiko, da übermäßige NOx-Emissionen vermieden werden. Darüber hinaus kann infolge des erfindungsgemäßen Verfahrens die Beladung des Katalysators mit Edelmetallen vermindert werden. Dadurch, dass das erfindungsgemäße Verfahren eine gesteigerte Robustheit aufweist, ergibt sich vorteilhaft eine dauerhafte Einhaltung der Emissionsspezifikationen des Gemisch-Regelungssystems bzw. des Antriebssystems.

Wie bekannt, produziert jedes System, das eine mit einem bestimmten Kraftstoff betriebene Brennkraftmaschine sowie eine Abgasnachbehandlung aufweist, u. a. individuell unterschiedlich viel O2, H2 und CH4 sowie weist zudem diesbezüglich alterungs- und vergiftungsabhängige Effekte auf. Insbesondere ist das Signal einer Lambdasonde - als Bestandteil der Abgasnachbehandlung des oben genannten Systems - stark abhängig von den Konzentrationen von O2, H2 und CH4 im Abgas. Erfindungsgemäß sind die durch diese Abhängigkeiten bedingten negativen Effekte auf die Schadstoffemission eines Systems mit einer Brennkraftmaschine bedeutungslos. Ferner ergibt sich durch das erfindungsgemäße Verfahren eine mögliche zukünftige Loslösung von Spezifikations-Vorgaben zum Kraftstoff für die Zulassung. Insbesondere entfällt bei Nutzung des erfindungsgemäßen Verfahrens der Versuch der Bestimmung des emissionsoptimalen Sollwerts für ein Emissionsoptimum mit Hilfe von Prüfstands-Messtechnik sowie ein Ablegen derartiger Werte in Kennfeldern.

Weitere vorteilhafte Ausgestaltungen der vorliegenden Erfindung sind dem nachfolgenden Ausführungsbeispiel sowie den abhängigen Patentansprüchen zu entnehmen.

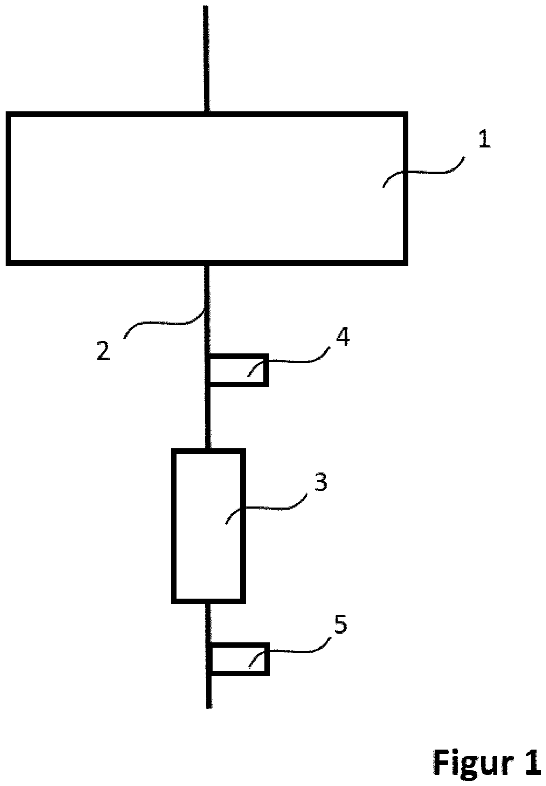

Wie in Figur 1 gezeigt, weist eine Brennkraftmaschine 1 neben weiteren allgemein bekannten Bauteilen eine Abgasanlage 2 mit einem Katalysator 3 bzw. ein geeignetes Abgasnachbehandlungssystem auf. Die Brennkraftmaschine 1 ist insbesondere ein Ottomotor mit einer Fremdzündung, der mit Benzin oder Gas (CNG, LPG) betrieben wird. Der Katalysator 3 umfasst zumindest eine sauerstoffspeichernde Komponente. Insbesondere ist der Katalysator 3 ein Dreiwegekatalysator. In der Abgasanlage 2 ist stromauf des Katalysators 3 ein erster Abgassensor 4 angeordnet, der in Kontakt mit dem Abgas der Brennkraftmaschine 1 steht. Dieser Abgassensor 4 ist insbesondere eine Lambdasonde. Es handelt sich dabei um eine so genannte Breitbandlambdasonde oder eine Zweipunkt-Lambdasonde. In der Abgasanlage 2 ist stromab des Katalysators 3 ein zweiter Abgassensor 5 angeordnet, der ebenfalls in Kontakt mit dem Abgas der Brennkraftmaschine 1 steht. Dieser Abgassensor 5 ist ebenfalls insbesondere eine Lambdasonde. Bevorzugt handelt es sich um eine so genannte Zweipunkt-Lambdasonde. Selbstverständlich umfasst die Brennkraftmaschine 1 auch eine Steuerungs-/Regelungseinheit, d. h. ein so genanntes Steuergerät, das bekanntermaßen das Zusammenwirken sämtlicher Sensoren (insbesondere der genannten Abgassensoren 4, 5) und Aktoren (insbesondere der Injektoren zur Zumessung von Kraftstoff bzw. zur Gemischbildung) der Brennkraftmaschine 1 sicherstellt.

Angenommen, es handelt sich bei dem ersten Abgassensor 4 und dem zweiten Abgassensor 5 jeweils um eine Lambdasonde, dann kann eine Regelung der Sauerstoffkonzentration im Abgas der Brennkraftmaschine 1 bzw. des Verbrennungsluftverhältnisses erfolgen, mit dem die Brennkraftmaschine 1 betrieben wird. Die Sauerstoffkonzentration im Abgas der Brennkraftmaschine 1 wird in der Fachwelt auch als Restsauerstoffgehalt im Abgas oder Anteil an Restsauerstoff im Abgas bezeichnet. Beispielsweise erfolgt eine Regelung des Verbrennungsluftverhältnisses anhand des ersten Abgassensors 4, welcher einen Istwert des Verbrennungsluftverhältnisses (anhand der Sauerstoffkonzentration im Abgas) repräsentiert, mit dem die Brennkraftmaschine 1 betrieben wird. Wie hinreichend bekannt, erfolgt dabei eine Rückkopplung des Signals des ersten Abgassensors 4 und ein Vergleich dieses Signals mit einer Führungsgröße/einem Sollwert bzw. die Bildung einer Regelabweichung, anhand derer mittels eines Reglers wiederum eine Stell- bzw. Steuergröße gebildet wird, wobei die Stellgröße insbesondere die Zufuhr von Kraftstoff zu der Brennkraftmaschine 1 und somit wiederum den Istwert des Verbrennungsluftverhältnisses, also die Regelgröße, beeinflusst. Jedenfalls kann auf diese Weise die Einstellung eines gewünschten Verbrennungsluftverhältnisses bzw. einer gewünschten Sauerstoffkonzentration im Abgas stromauf des Katalysators 3 erfolgen. Eine solche Regelung des Verbrennungsluftverhältnisses, mit dem die Brennkraftmaschine 1 betrieben wird, kann auch anhand des zweiten Abgassensors 5 erfolgen, welcher ebenfalls einen Istwert des Verbrennungsluftverhältnisses repräsentiert, mit dem die Brennkraftmaschine 1 betrieben wird. Insbesondere erfolgt jedoch eine Regelung des Verbrennungsluftverhältnisses, mit dem die Brennkraftmaschine 1 betrieben wird, durch eine Kombination der Regelung des Verbrennungsluftverhältnisses anhand des ersten Abgassensors 4 und der Regelung des Verbrennungsluftverhältnisses anhand des zweiten Abgassensors 5. Wie allgemein bekannt, werden dabei die beiden genannten Regelkreise ineinander geschachtelt. Bei einer solchen Kaskadierung mehrerer Regelkreise stellt die Regelung des Verbrennungsluftverhältnisses anhand des zweiten Abgassensors 5 die äußere Regelungsschale dar, also den Führungsregler, und die Regelung des Verbrennungsluftverhältnisses anhand des ersten Abgassensors 4 stellt die innere Regelschale dar, also den Folgeregler, wobei die Ausgangsgröße des Führungsreglers als Führungsgröße für den Folgeregler dient bzw. die Führungsgröße des Folgereglers zumindest in Abhängigkeit der Ausgangsgröße des Führungsreglers beeinflusst wird. Anders gesagt, die Regelung des Gemisches, mit dem die Brennkraftmaschine 1 betrieben wird, erfolgt auf Basis kaskadierter Regelkreise, wobei die äußere Regelschale (hier der Regelkreis, bei dem die Regelgröße/der Istwert das Signal des zweiten Abgassensors 5 ist) den Sollwert des zumindest einen inneren Regelkreises (hier der Regelkreis, bei dem die Regelgröße/der Istwert das Signal des ersten Abgassensors 4 ist) derart beeinflusst, dass das Regelziel der äußeren Reglerschale erreicht wird. Somit stellt der Regelkreis, bei dem die Regelgröße/der Istwert das Signal des zweiten Abgassensors 5 ist, den Master in Hinsicht auf die Sollwertvorgabe in der Struktur der Regelung des Verbrennungsluftverhältnisses dar, mit dem die Brennkraftmaschine 1 betrieben wird, insbesondere hinsichtlich der Regelung bzw. Einstellung des Gemisches bzw. der Menge an Kraftstoff, welche der Brennkraftmaschine 1 zugemessen wird.

Wie allgemein bekannt, wird zum Zweck einer Steigerung der Wirksamkeit des Abgasreinigungssystems bzw. des Katalysators 3 die Brennkraftmaschine 1 derart betrieben, dass die Sauerstoffkonzentration im Abgas der Brennkraftmaschine 1 wiederholt zeitlich schwankt. D. h. die Sauerstoffkonzentration im Abgas der Brennkraftmaschine 1 oszilliert. Eine solche Zwangsanregung wird insbesondere durch eine Beeinflussung der Gemischbildung der Brennkraftmaschine 1 erreicht und bewirkt, dass sich Fett-Mager-Sprünge und Mager-Fett-Sprünge ergeben. Die Brennkraftmaschine 1 wird also mit einem sich insbesondere periodisch ändernden Verbrennungsluftverhältnis betrieben. D. h. der Betrieb der Brennkraftmaschine 1 erfolgt abwechselnd mit einem fetten und einem mageren Gemisch, so dass der Restsauerstoffanteil/die Sauerstoffkonzentration im Abgas ebenfalls oszilliert und ein Einlagern und Auslagern von Sauerstoff in der sauerstoffspeichernden Komponente des Katalysators 3 erfolgt, was sich vorteilhaft auf die Abgasreinigung auswirkt. Insbesondere erfolgt ein solcher Betrieb der Brennkraftmaschine 1 abwechselnd mit einem fetten und einem mageren Gemisch derart, dass der Restsauerstoffgehalt/die Sauerstoffkonzentration im Abgas/das Verbrennungsluftverhältnis um einen bestimmten Mittelwert schwankt. Dieser Mittelwert wird insbesondere durch die Führungsgröße/den Sollwert und/oder die Stellgrößen eines Reglers oder mehrerer verwendeter (und oben beschriebener) Regler bzw. Regelkreise zur Einstellung des Verbrennungsluftverhältnisses der Brennkraftmaschine 1 beeinflusst bzw. definiert. D. h. beispielsweise durch Vorgabe einer Abfolge von Sollwerten für das Verbrennungsluftverhältnis von Lambda=1,02 und Lambda=0,98 (mit einer bestimmten Häufigkeit bzw. Frequenz) erfolgt ein solcher Betrieb der Brennkraftmaschine 1 abwechselnd mit einem fetten und einem mageren Gemisch derart, dass der Restsauerstoffanteil/die Sauerstoffkonzentration im Abgas/das Verbrennungsluftverhältnis um diesen bestimmten Mittelwert, nämlich hier um Lambda=1,0 schwankt. Denkbar ist es auch, bei konstantem Sollwert eine Stellgröße des zu Grunde liegenden Regelkreises derart zu variieren bzw. mit einer Variation zu überlagern, dass symmetrische Amplituden von +/- 2% möglich sind, dann kann der Restsauerstoffanteil/die Sauerstoffkonzentration im Abgas für einen Moment derart eingestellt sein, dass das Verbrennungsluftverhältnis Lambda=0,98 und in einem weiteren Moment Lambda=1,02 beträgt, wobei der Sollwert stets Lambda=1,0 ist, d. h. die Amplitude dieser aufmodulierten Schwingung beträgt Lambda = +/- 0,02. Denkbar sind auch asymmetrische Amplituden von z. B. +2% aber nur -1%, so dass ein Betrieb der Brennkraftmaschine 1 abwechselnd mit einem fetten und einem mageren Gemisch erfolgt und der Mittelwert, um den der Restsauerstoffanteil/die Sauerstoffkonzentration im Abgas/das Verbrennungsluftverhältnis schwankt, beeinflusst werden kann. Der Mittelwert, um den der Restsauerstoffanteil/die Sauerstoffkonzentration im Abgas/das Verbrennungsluftverhältnis schwankt, wird auch als "Gemischlage" bezeichnet.

Zusammengefasst werden für eine solche Zwangsanregung der Sollwert des Verbrennungsluftverhältnisses oder eine Stellgröße der Regelung des Verbrennungsluftverhältnisses mit einer Fett-/Mager-Amplitude überlagert, so dass eine Beeinflussung des Luft/KraftstoffGemisches erfolgt, das der Brennkraftmaschine 1 zugeführt wird und die Sauerstoffkonzentration im Abgas oszilliert, um die Reinigungseffizienz des Katalysators 3 zu erhöhen.

Jedenfalls bewirkt der abwechselnde Betrieb einer Brennkraftmaschine 1, welche einen in der Abgasanlage 2 angeordneten Katalysator 3 umfasst, mit einem fetten und einem mageren Gemisch, infolgedessen die Sauerstoffkonzentration im Abgas ebenfalls oszilliert, dass sich einerseits eine dem Bereich stromaufwärts des Katalysators 3, d. h. vor Eintritt in den Katalysator 3, zuzuordnende, erfassbare und auswertbare zeitliche Schwankung einer die Sauerstoffkonzentration im Abgas beeinflussenden oder alternativ einer die Sauerstoffkonzentration im Abgas repräsentierenden Größe ergibt, welche jeweils nicht durch den Katalysator 3 beeinflusst ist. D. h. eine solche, nicht durch den Katalysator 3 beeinflusste Größe kann ein Sollwert oder eine Stellgröße der Regelung des Verbrennungsluftverhältnisses bzw. eine sonstige, die Sauerstoffkonzentration im Abgas beeinflussenden Größe bzw. das Verbrennungsluftverhältnis beeinflussende Größe sein. Alternativ kann diese Größe aber auch das Signal des ersten Abgassensors 4 und somit eine die Sauerstoffkonzentration im Abgas repräsentierende Größe sein.

Andererseits bewirkt der abwechselnde Betrieb einer Brennkraftmaschine 1, welche einen in der Abgasanlage 2 angeordneten Katalysator 3 umfasst, mit einem fetten und einem mageren Gemisch, infolgedessen die Sauerstoffkonzentration im Abgas ebenfalls oszilliert, dass sich eine dem Bereich stromabwärts des Katalysators 3 in der Abgasanlage 2, d. h. nach Austritt aus dem Katalysator 3 bzw. nach Passieren des Katalysators 3, zuzuordnende zeitliche Schwankung einer Größe ergibt, welche durch den Katalysator 3 beeinflusst ist.

Mit anderen Worten stehen beim Betrieb einer Brennkraftmaschine 1 mehrere Größen bereit, für eine Erfassung und Weiterverarbeitung. Diese Größen können zum Zweck einer besseren Unterscheidung Gruppen zugeordnet werden. Eine erste Gruppe umfasst dabei zumindest eine Größe, welche die Sauerstoffkonzentration im Abgas der Brennkraftmaschine 1 stromaufwärts des Katalysators 3 entweder beeinflusst oder alternativ repräsentiert. Eine zweite Gruppe umfasst dabei zumindest eine Größe, welche die Sauerstoffkonzentration im Abgas der Brennkraftmaschine 1 stromabwärts des Katalysators 3 repräsentiert.

Eine der ersten Gruppe zuzuordnende Größe ist also eine erfassbare und auswertbare zeitliche Schwankung einer die Sauerstoffkonzentration im Abgas beeinflussenden oder alternativ einer die Sauerstoffkonzentration im Abgas repräsentierenden Größe, wobei jeweils das Abgas im Bereich stromaufwärts des Katalysators 3, d. h. vor Eintritt in den Katalysator 3, betrachtet wird, welches somit jeweils noch nicht mit dem Katalysator 3 in Kontakt gekommen ist. D. h. eine solche Größe, welche die Sauerstoffkonzentration im Abgas beeinflusst oder alternativ repräsentiert, wobei das Abgas jeweils noch nicht mit dem Katalysator 3 kontaktiert wurde, kann ein Sollwert oder eine Stellgröße der Regelung des Verbrennungsluftverhältnisses bzw. eine sonstige, die Sauerstoffkonzentration im Abgas beeinflussende Größe bzw. das Verbrennungsluftverhältnis beeinflussende Größe sein oder kann alternativ das Signal des ersten Abgassensors 4 sein. Anders gesagt - eine der ersten Gruppe zuzuordnende Größe ist unmittelbar, d. h. direkt, mit der Sauerstoffkonzentration im Abgas verknüpft und beeinflusst die Sauerstoffkonzentration im Abgas und zwar noch bevor das Abgas mit dem Katalysator 3 kontaktiert wird. Eine weitere der ersten Gruppe zuzuordnende Größe ist nur mittelbar, d. h. indirekt, mit der Sauerstoffkonzentration im Abgas verknüpft und beeinflusst die Sauerstoffkonzentration im Abgas nicht, sondern repräsentiert die Sauerstoffkonzentration im Abgas lediglich und zwar noch bevor das Abgas mit dem Katalysator 3 kontaktiert wird.

Im Ergebnis steht zumindest eine der ersten Gruppe zuzuordnende Größe bereit, die sich zeitlich ändert und die erfasst und ausgewertet werden kann und die eine Änderung/Schwankung des Restsauerstoffanteils/der Sauerstoffkonzentration im Abgas verursacht oder repräsentiert bzw. sichtbar macht und die nicht durch den Katalysator 3 beeinflusst ist, da diese den Zustand bzw. die Zusammensetzung des Abgases der Brennkraftmaschine 1 vor Eintritt des Abgases in den Katalysator 3 betrifft, also die Situation stromauf des Katalysators 3.

Diese der ersten Gruppe zuzuordnende Größe entspricht in einer ersten möglichen Ausführung einer Stellgröße bzw. einem Stellsignal oder einem Sollwert/einer Führungsgröße der Regelung des Verbrennungsluftverhältnisses, mit dem die Brennkraftmaschine 1 betrieben wird, also zum Beispiel der so genannten Einspritzzeit (als Stellgröße) oder dem Verbrennungsluftverhältnis (als Sollwert, beispielsweise Lambda=1), wie dem Fachmann allgemein bekannt ist. Diese Größe ändert sich jedenfalls zeitlich, eben um die Brennkraftmaschine 1 abwechselnd mit einem fetten und mageren Gemisch bzw. einem sich ändernden Anteil an Restsauerstoff im Abgas zu betreiben, wie schon mehrfach dargelegt wurde.

Alternativ entspricht diese der ersten Gruppe zuzuordnende Größe in einer weiteren Ausführung dem Signal des ersten Abgassensors 4, beispielsweise der Spannung einer Zweipunkt-Lambdasonde oder dem Pumpstrom einer Breitband-Lambdasonde. Diese Größe ändert sich dabei zeitlich, weil die Brennkraftmaschine 1 abwechselnd mit einem fetten und mageren Gemisch bzw. einem sich veränderlichen Anteil an Restsauerstoff im Abgas betrieben wird.

Weiterhin steht eine der zweiten Gruppe zuzuordnende Größe bereit, die sich zeitlich ändert und die erfasst und ausgewertet werden kann und die den Restsauerstoffanteil/die Sauerstoffkonzentration im Abgas repräsentiert und die durch den Katalysator 3 beeinflusst ist, da diese nach Austritt des Abgases aus dem Katalysator 3, d. h. nach Passieren des Katalysators 3, im Abgas erfasst wird. Diese Größe entspricht insbesondere dem Signal des zweiten Abgassensors 5, beispielsweise der Spannung einer Zweipunkt-Lambdasonde oder dem Pumpstrom einer Breitband-Lambdasonde. Diese Größe ändert sich dabei zeitlich, so wie die der ersten Gruppe zuzuordnende Größe bzw. der ersten Gruppe zuzuordnenden Größen auch, weil die Brennkraftmaschine 1 abwechselnd mit einem fetten und mageren Gemisch bzw. einem sich abwechselnden/veränderlichen Anteil an Restsauerstoff/sich abwechselnder/verändernder Sauerstoffkonzentration im Abgas betrieben wird. Damit das Signal des zweiten Abgassensors 5, sofern dieser als Zweipunkt- bzw. Sprung-Lambdasonde ausgeführt ist, gut erfasst und ausgewertet werden kann, sollte der Betrieb der Brennkraftmaschine 1 derart beeinflusst werden, dass sich eine Amplitude dieses Signals (peak-topeak) von mindestens 30 mV ergibt.

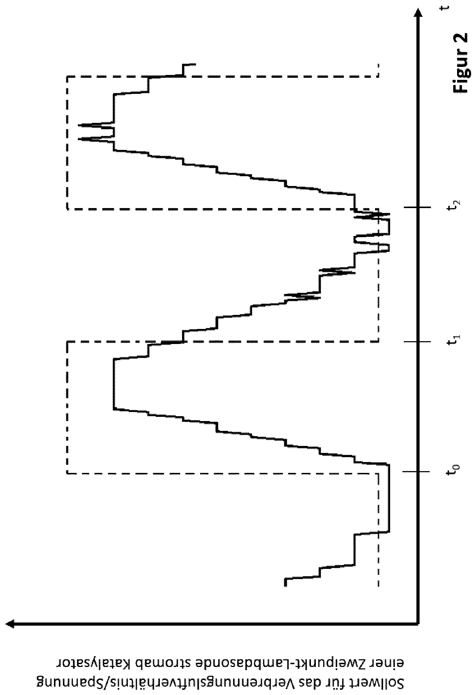

In Figur 2 ist mittels der gestrichelten Linie der Verlauf einer Größe über der Zeit gezeigt, die der ersten Gruppe gemäß der ersten möglichen Ausführung zuzuordnen ist, nämlich der Verlauf eines Sollwertes für das Verbrennungsluftverhältnis, mit dem die Brennkraftmaschine 1 betrieben werden soll, wobei dieser Sollwert sich zeitlich ändert und erfasst und ausgewertet werden kann und den Restsauerstoffanteil/die Sauerstoffkonzentration im Abgas sowohl vor Eintritt in den Katalysator 3 als auch nach Austritt aus dem Katalysator 3 beeinflusst. Insbesondere ist mittels der gestrichelten Linie der Verlauf des Sollwertes des äußeren Regelkreises, der oben beschrieben ist, abgebildet, also der Verlauf des Sollwertes betreffend den Restsauerstoffanteil (oder Restsauerstoffgehalt bzw. die Sauerstoffkonzentration) im Abgas, stromab des Katalysators 3 bzw. des Sollwertes für die Spannung des zweiten Abgassensors 5 bzw. des Sollwertes für die Sauerstoffkonzentration im Abgas stromab des Katalysators 3 bzw. des Sollwertes für das Verbrennungsluftverhältnis, mit dem die Brennkraftmaschine 1 betrieben wird.

In Figur 2 ist mittels der durchgezogenen Linie der Verlauf der Größe über der Zeit gezeigt, die der zweiten Gruppe zuzuordnen ist, nämlich das Signal des zweiten Abgassensors 5 der stromab des Katalysators 3 in der Abgasanlage 2 angeordnet ist. Der zweite Abgassensor 5 ist bevorzugt eine Zweipunkt-Lambdasonde und in Figur 2 ist der Verlauf der Spannung dieser Zweipunkt-Lambdasonde über der Zeit abgebildet. Infolge der oben beschriebenen wechselnden Änderung des Verbrennungsluftverhältnisses bzw. der (periodischen) Anregung des Restsauerstoffanteils/der Sauerstoffkonzentration im Abgas der Brennkraftmaschine 1, ändert sich die Spannung des zweiten Abgassensors 5 über der Zeit regelmäßig. Insbesondere schwankt die Spannung um einen Wert, nämlich um den Sollwert des äußeren Regelkreises, der oben beschrieben ist, also um den Sollwert (d. h. um den Mittelwert des Sollwertes) betreffend den Restsauerstoffanteil im Abgas, stromab des Katalysators 3, der hier natürlich durch die Spannung einer Zweipunkt-Lambdasonde repräsentiert wird. Die Spannung des zweiten Abgassensors 5 ist also ein Maß für die Sauerstoffkonzentration im Abgas stromab des Katalysators 3 bzw. ein Maß für das Verbrennungsluftverhältnis, mit dem die Brennkraftmaschine 1 betrieben wird.

Der mittels der gestrichelten Linie gezeigte Sollwert für das Verbrennungsluftverhältnis vergrößert sich gemäß Figur 2 beispielsweise zum Zeitpunkt t₀, d. h. ab diesem Zeitpunkt wird z. B. der Brennkraftmaschine 1 eine geringere Menge an Kraftstoff zugeführt, jedenfalls wird das Gemisch magerer (insbesondere Lambda > 1) und die Sauerstoffkonzentration im Abgas steigt an. Infolgedessen sinkt die Spannung des als Zweipunkt-Lambdasonde ausgeführten zweiten Abgassensors 5 ab, allerdings erst nach einer zeitlichen Verzögerung, d. h. zunächst steigt auch die Spannung des als Zweipunkt-Lambdasonde ausgeführten zweiten Abgassensors 5 an, was sich aus den im weiteren Verlauf genannten Zusammenhängen ergibt.

Dieses zunächst simultane Ansteigen von Sauerstoffkonzentration im Abgas und Spannung des stromab des Katalysators 3 in der Abgasanlage 2 angeordneten zweiten Abgassensors 5 ergibt sich einerseits aus der zeitlichen Verzögerung, die durch den Transport des Abgases durch die Abgasanlage 2 (Totzeit) bedingt ist und andererseits aus der Speicherwirkung des Katalysators 3 bzw. der zumindest einen sauerstoffspeichernden Komponente des Katalysators 3. Die Spannung des stromab des Katalysators 3 in der Abgasanlage 2 angeordneten zweiten Abgassensors 5 steigt deshalb nach dem Zeitpunkt t₀ zunächst an, da erst ab etwa diesem Zeitpunkt der im Katalysator 3 gespeicherte Sauerstoff aufgebraucht ist und die bis zu dem Zeitpunkt t₀ für eine Sicherstellung eines vergleichsweise geringen Verbrennungsluftverhältnisses (insbesondere Lambda < 1) der Brennkraftmaschine 1 zugeführte größere Menge an Kraftstoff erst etwa ab dem Zeitpunkt t₀ zu einer Verringerung der Sauerstoffkonzentration stromab des Katalysators 3 führt.

Jedenfalls wird ab dem Zeitpunkt t₁ der Sollwert für das Verbrennungsluftverhältnis ausgehend von dem seit dem Zeitpunkt t₀ vorliegenden mageren Gemisch wieder verkleinert (insbesondere auf Lambda < 1), zum Zweck der oben beschriebenen Verbesserung der Wirksamkeit der Abgasnachbehandlung, also der so genannten Zwangsanregung. D. h. ab dem Zeitpunkt t₁ wird z. B. der Brennkraftmaschine 1 wieder eine größere Menge an Kraftstoff zugeführt, jedenfalls wird das Gemisch fetter und die Sauerstoffkonzentration im Abgas sinkt ab. Jedoch sinkt auch die Spannung des als Zweipunkt-Lambdasonde ausgeführten zweiten Abgassensors 5 ab. Dieses zunächst simultane Absinken von Sauerstoffkonzentration im Abgas und Spannung des stromab des Katalysators 3 in der Abgasanlage 2 angeordneten zweiten Abgassensors 5 ergibt sich ebenfalls aus der Speicherwirkung des Katalysators 3 bzw. der zumindest einen sauerstoffspeichernden Komponente des Katalysators 3.

Die Spannung des stromab des Katalysators 3 in der Abgasanlage 2 angeordneten zweiten Abgassensors 5 sinkt deshalb nach dem Zeitpunkt t₁ zunächst ab, da ab dem Zeitpunkt t₁ einerseits im Katalysator 3 infolge der bis zum Zeitpunkt t₁ andauernden Phase mit einer höheren Sauerstoffkonzentration im Abgas erneut im Katalysator 3 gespeicherter Sauerstoff verfügbar ist und andererseits ab dem Zeitpunkt t₁ für eine Sicherstellung eines vergleichsweise geringeren Verbrennungsluftverhältnisses (insbesondere Lambda < 1) der Brennkraftmaschine 1 eine größere Menge an unverbranntem Kraftstoff im Abgas verfügbar ist, so dass eine Oxidation insbesondere unverbrannter Kohlenwasserstoffe und des im Katalysator 3 gespeicherten Sauerstoffes in Gegenwart des Katalysators 3 erfolgt und somit zunächst keine Verringerung der Sauerstoffkonzentration stromab des Katalysators 3 erfolgt, sondern gegenüber der Phase zwischen dem Zeitpunkt t₀ und dem Zeitpunkt t₁ eine Erhöhung der Sauerstoffkonzentration stromab des Katalysators 3 erfolgt.

Zum Zeitpunkt t₂ ist wieder die oben im Zusammenhang mit dem Zeitpunkt t₀ beschriebene Situation erreicht. D. h. zum Zeitpunkt t₂ ist das Entladen des Sauerstoffspeichers des Katalysators 3 wieder abgeschlossen und ein erneutes Beladen beginnt, so wie es zwischen dem Zeitpunkt t₀ und dem Zeitpunkt t₁ erfolgt ist.

Der in Figur 2 mittels der gestrichelten Linie gezeigte Verlauf der Größe über der Zeit, die der ersten Gruppe gemäß der ersten möglichen Ausführung zuzuordnen ist, nämlich der Verlauf eines Sollwertes für das Verbrennungsluftverhältnis, mit dem die Brennkraftmaschine 1 betrieben werden soll, wobei dieser Sollwert sich zeitlich ändert und erfasst und ausgewertet werden kann und den Restsauerstoffanteil/die Sauerstoffkonzentration im Abgas sowohl vor Eintritt in den Katalysator 3 als auch nach Austritt aus dem Katalysator 3 beeinflusst, kann auch eine Stellgröße der Regelung des Verbrennungsluftverhältnisses sein. Diese Stellgröße kann sich dabei im Vergleich zu dem in Figur 2 gezeigten Verlauf des Sollwertes für das Verbrennungsluftverhältnis umgekehrt verhalten. So kann diese Stellgröße dann steigen bzw. größer werden, wenn das Verbrennungsluftverhältnis sinkt (und insbesondere Lambda < 1 wird) bzw. dann sinken, wenn das Verbrennungsluftverhältnis steigt (und insbesondere Lambda > 1 wird). Die Stellgröße bzw. das Stellsignal der Regelung des Verbrennungsluftverhältnisses entspricht dann beispielsweise einem Faktor, der mit einer Kraftstoffmenge oder Kraftstoffmasse multipliziert wird, welche der Brennkraftmaschine 1 zugeführt wird oder der so genannten Einspritzzeit, wie dem Fachmann allgemein bekannt ist.

Der in Figur 2 mittels der gestrichelten Linie gezeigte Verlauf der Größe über der Zeit, die der ersten Gruppe gemäß der ersten möglichen Ausführung zuzuordnen ist, nämlich der Verlauf eines Sollwertes für das Verbrennungsluftverhältnis, mit dem die Brennkraftmaschine 1 betrieben werden soll, wobei dieser Sollwert sich zeitlich ändert und erfasst und ausgewertet werden kann, entspricht alternativ dem Signal des ersten Abgassensors 4 und somit einer die Sauerstoffkonzentration im Abgas stromaufwärts des Katalysators 3 repräsentierenden Größe. Das Signal des ersten Abgassensors 4 ist in keiner der Figuren gezeigt. Das Signal (also die Spannung) des ersten Abgassensors 4 verhält sich, sofern der erste Abgassensor 4 als Zweipunkt-Lambdasonde ausgeführt ist, wenn auch gegenläufig, hinsichtlich seines Verlaufes unmittelbar, d. h. direkt so, wie die Größe, die ebenfalls der ersten Gruppe zugeordnet ist und welche die Sauerstoffkonzentration im Abgas beeinflusst, nämlich direkt so wie der Sollwert für das Verbrennungsluftverhältnis, wenn auch gegenläufig. Dieses Verhalten ergibt sich, weil das Abgas noch nicht den Katalysator 3 passiert hat, wenn es mit dem ersten Abgassensor 4 in Kontakt tritt. So wird das Signal des ersten Abgassensors 4 größer, unmittelbar wenn das Verbrennungsluftverhältnis sinkt (und insbesondere Lambda < 1 wird) bzw. wird dann unmittelbar kleiner, wenn das Verbrennungsluftverhältnis steigt (und insbesondere Lambda > 1 wird), wobei natürlich Laufzeiten zwischen dem Austritt des Abgases aus den Zylindern der Brennkraftmaschine 1 und dem Kontakt mit dem ersten Abgassensor 4 hierbei beachtet bzw. herausgerechnet werden.

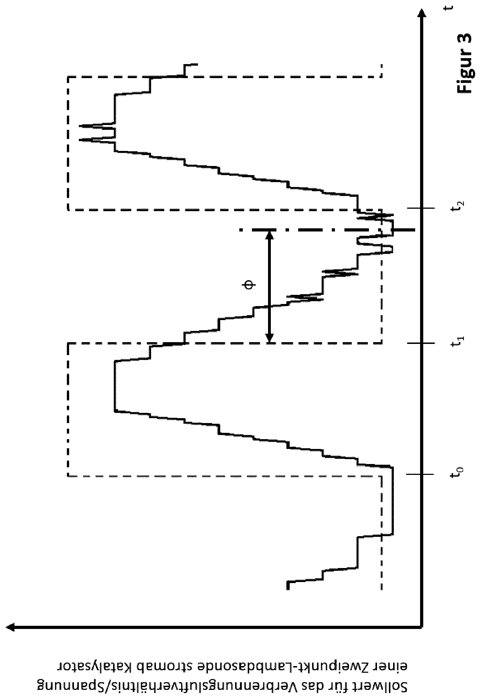

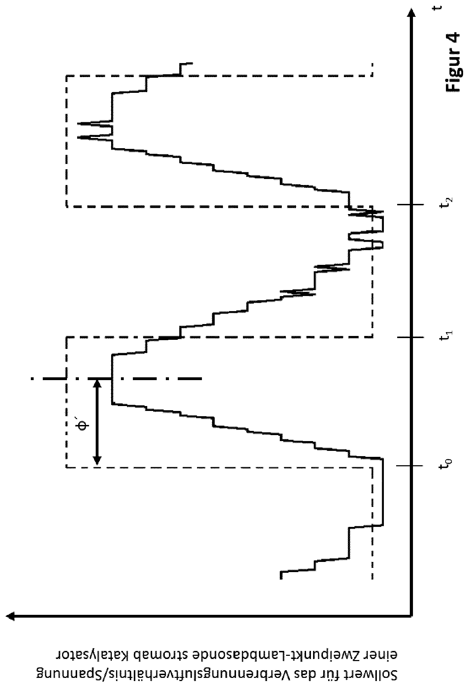

Wie in Figur 3 gezeigt, wird erfindungsgemäß zum Zweck einer Minimierung des Emissionsausstoßes der Brennkraftmaschine 1 eine Phasendifferenz ϕ zwischen einer Größe der ersten Gruppe und einer Größe der zweiten Gruppe bestimmt. D. h. es wird beispielsweise die Phasendifferenz ϕ (insbesondere eine Zeitdifferenz) bestimmt, zwischen dem Sollwert für das Verbrennungsluftverhältnis zum dem Zeitpunkt t₁, d. h. dem Zeitpunkt, an dem eine Änderung des Sollwertes für das Verbrennungsluftverhältnis ausgehend von dem seit dem Zeitpunkt t₀ vorliegenden mageren Gemisch hin zu einem fetten Gemisch (Mager-Fett-Sprung) erfolgt und beispielsweise dem darauffolgenden lokalen Minimum der Spannung des als Zweipunkt-Lambdasonde ausgeführten zweiten Abgassensors 5, d. h. dem Zeitpunkt, an dem ein Entladen des Sauerstoffspeichers des Katalysators 3 abgeschlossen oder nahezu abgeschlossen ist und ein erneutes Beladen dieses Sauerstoffspeichers bevorsteht, wobei dieser Zeitpunkt auch der Zeitpunkt t₂ gemäß Figur 2 bzw. Figur 3 sein kann. Natürlich können auch weitere die Phasendifferenz ϕ kennzeichnende Merkmale zwischen einer Größe der ersten Gruppe und einer Größe der zweiten Gruppe bestimmt werden. Beispielsweise kann gemäß Figur 4 auch die Phasendifferenz ϕ' (insbesondere Zeitdifferenz) bestimmt werden, zwischen dem Sollwert für das Verbrennungsluftverhältnis zum dem Zeitpunkt t₀, d. h. dem Zeitpunkt, an dem eine Änderung des Sollwertes für das Verbrennungsluftverhältnis ausgehend von einem vor dem Zeitpunkt t₀ vorliegenden fetten Gemisch hin zu einem mageren Gemisch erfolgt (Fett-Mager-Sprung) und beispielsweise dem darauffolgenden lokalen Maximum der Spannung des als Zweipunkt-Lambdasonde ausgeführten zweiten Abgassensors 5, d. h. dem Zeitpunkt, an dem ein Beladen des Sauerstoffspeichers des Katalysators 3 abgeschlossen ist und ein erneutes Entladen dieses Sauerstoffspeichers beginnt, wobei dieser Zeitpunkt auch der Zeitpunkt t₁ gemäß Figur 2 bzw. Figur 3 sein kann. Wie zuvor beschrieben, ist auch das Signal des ersten Abgassensors 4 der ersten Gruppe zugehörig. Alternativ kann daher, wenn auch in keiner der Figuren gezeigt, aber dennoch in Analogie zu Figur 2 oder 3, eine Phasendifferenz ϕ (insbesondere eine Zeitdifferenz) bestimmt werden, zwischen dem Signal des ersten Abgassensors 4 zu dem Zeitpunkt t₁, d. h. dem Zeitpunkt, an dem eine Änderung des Sollwertes für das Verbrennungsluftverhältnis ausgehend von dem seit dem Zeitpunkt t₀ vorliegenden mageren Gemisch hin zu einem fetten Gemisch erfolgt, so dass infolgedessen das Signal (also die Spannung) des als Zweipunkt-Lambdasonde ausgeführten ersten Abgassensors 4 mit einer gewissen Verzögerung, die sich insbesondere aus der Laufzeit des Abgases vom Ort der Entstehung bis zum Kontakt mit dem ersten Abgassensor 4 ergibt und nicht durch die Speicherwirkung des Katalysators 3 bzw. der zumindest einen sauerstoffspeichernden Komponente des Katalysators 3 bedingt ist, ansteigt und beispielsweise dem darauffolgenden lokalen Minimum der Spannung des als Zweipunkt-Lambdasonde ausgeführten zweiten Abgassensors 5, d. h. dem Zeitpunkt, an dem ein Entladen des Sauerstoffspeichers des Katalysators 3 abgeschlossen oder nahezu abgeschlossen ist und ein erneutes Beladen dieses Sauerstoffspeichers bevorsteht, wobei dieser Zeitpunkt auch der Zeitpunkt t₂ gemäß Figur 2 bzw. Figur 3 sein kann. Der erste Abgassensor 4 kann in diesem Zusammenhang hier auch als Breitband-Lambdasonde ausgeführt sein, so dass sich der zuvor genannte Signalverlauf des ersten Abgassensors 4 umkehrt, wie dem Fachmann bekannt ist. Natürlich können auch weitere die Phasendifferenz ϕ kennzeichnende Merkmale zwischen dieser Größe der ersten Gruppe und einer Größe der zweiten Gruppe bestimmt werden. Beispielsweise kann in Analogie zu Figur 4 auch die Phasendifferenz ϕ' (insbesondere eine Zeitdifferenz) bestimmt werden, zwischen dem Signal des ersten Abgassensors 4 zum dem Zeitpunkt t₀, d. h. dem Zeitpunkt, an dem eine Änderung des Sollwertes für das Verbrennungsluftverhältnis ausgehend von einem vor dem Zeitpunkt t₀ vorliegenden fetten Gemisch hin zu einem mageren Gemisch erfolgt, so dass infolgedessen das Signal des ersten Abgassensors 4 unmittelbar sinkt und beispielsweise dem darauffolgenden lokalen Maximum der Spannung des als Zweipunkt-Lambdasonde ausgeführten zweiten Abgassensors 5, d. h. dem Zeitpunkt, an dem ein Beladen des Sauerstoffspeichers des Katalysators 3 abgeschlossen ist und ein erneutes Entladen dieses Sauerstoffspeichers beginnt, wobei dieser Zeitpunkt auch der Zeitpunkt t₁ gemäß Figur 2 bzw. Figur 3 sein kann. Anstelle der (ggf. ausschließlichen) Auswertung von Extremwerten (Minima, Maxima) der betreffenden Größen kann die Bestimmung der Phasendifferenz ϕ auch ausschließlich anhand der (fallenden oder steigenden) Flanken einer Größe der ersten Gruppe und der (fallenden oder steigenden) Flanken einer Größe der zweiten Gruppe erfolgen. Jedenfalls erfolgt die Bestimmung der Phasendifferenz ϕ zwischen einer Größe der ersten Gruppe und einer Größe der zweiten Gruppe anhand des Verlaufes einer Größe der ersten Gruppe und einer Größe der zweiten Gruppe. Dabei werden charakteristische Merkmale des Verlaufes einer Größe der ersten Gruppe und einer Größe der zweiten Gruppe miteinander in Beziehung gesetzt.

Jedenfalls steht auf diese Weise eine Angabe bzw. ein Wert betreffend die Phasendifferenz ϕ, ϕ' zwischen einer Größe der ersten Gruppe und einer Größe der zweiten Gruppe bereit, für eine weitere Verarbeitung.

Die auf diese Weise ermittelte Phasendifferenz ϕ, ϕ', die auch als Phasenverschiebung oder Phasenlage bezeichnet werden kann, wird erfindungsgemäß für mehrere Gemischlagen, d. h. für jeden eingestellten Mittelwert bzw. bei jedem eingestellten Mittelwert (um den sich die Sauerstoffkonzentration im Abgas wiederholt ändert), bestimmt. D. h. die auf die bisher beschriebene Weise bestimmte Phasendifferenz ϕ, ϕ' wurde lediglich bei einem abwechselnden Betrieb der Brennkraftmaschine 1 mit einem fetten und einem mageren Gemisch bestimmt, wobei der Restsauerstoffanteil/die Sauerstoffkonzentration im Abgas/das Verbrennungsluftverhältnis um einen gewissen Mittelwert, beispielsweise um Lambda=1,0 schwankt.

Erfindungsgemäß wird daher in einem weiteren Schritt die Brennkraftmaschine 1 abwechselnd mit einem fetten und einem mageren Gemisch betrieben, wobei die Sauerstoffkonzentration im Abgas/das Verbrennungsluftverhältnis um einen anderen Mittelwert als bei der Bestimmung der Phasendifferenz ϕ, ϕ' im vorherigen Schritt schwankt, d. h. beispielsweise um Lambda=1,1, wobei erneut, so wie schon beschrieben, die Phasendifferenz ϕ, ϕ' bestimmt wird. Diese Variation des Mittelwertes, um den der Restsauerstoffanteil/die Sauerstoffkonzentration im Abgas/das Verbrennungsluftverhältnis schwankt sowie jeweils die Bestimmung der dazugehörigen Phasendifferenz ϕ, ϕ' ermöglicht die Bildung eines Zusammenhanges zwischen dem Verbrennungsluftverhältnis, der Gemischlage bzw. der mittleren Sauerstoffkonzentration im Abgas mit dem die Brennkraftmaschine 1 im Mittel bzw. entsprechend dem jeweiligen Mittelwert betrieben wird, als Funktionsargument, und der Phasendifferenz ϕ, ϕ', als Funktionswert. D. h. diese Beziehung zwischen der unabhängigen Variable "Gemischlage/mittlere Sauerstoffkonzentration im Abgas/Verbrennungsluftverhältnis" und der davon abhängigen Variable "Phasendifferenz ϕ, ϕ'" steht für eine weitere Verarbeitung bereit.

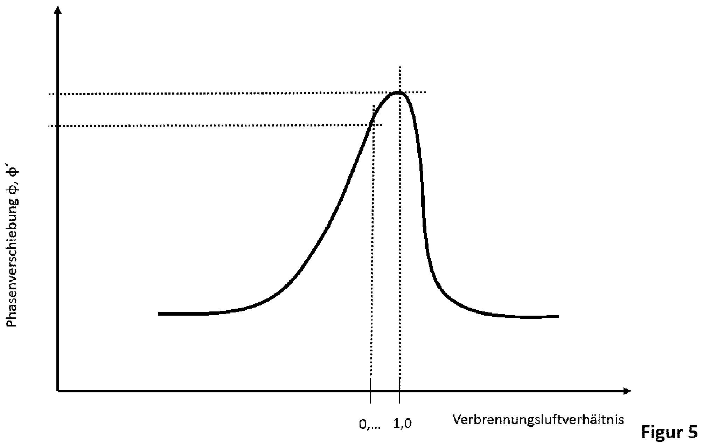

Wie in Figur 5 gezeigt, nimmt die Phasenverschiebung/Phasendifferenz ϕ, ϕ' als Funktion des Verbrennungsluftverhältnisses bzw. der Sauerstoffstoffkonzentration im Abgas, mit dem die Brennkraftmaschine 1 im Mittel bzw. entsprechend einem Mittelwert betrieben wird, im Bereich um Lambda=1, d. h. bei einer entsprechenden Sauerstoffkonzentration/Restsauerstoffgehalt im Abgas ein Maximum an.

Um die Brennkraftmaschine 1 erfindungsgemäß mit möglichst geringen Emissionen zu betreiben, also mit einer möglichst effektiven Abgasnachbehandlung, erfolgt ein Betrieb der Brennkraftmaschine 1 mit einem Verbrennungsluftverhältnis bzw. mit einem um einen Mittelwert eines Verbrennungsluftverhältnisses schwankenden Verbrennungsluftverhältnis, das in Abhängigkeit der in Figur 5 gezeigten Funktion bestimmt wird. Insbesondere erfolgt diese Bestimmung in Abhängigkeit von dem Maximum der in Figur 5 gezeigten Funktion. Im Rahmen von Versuchen hat sich unerwartet gezeigt, dass sich dann minimale Abgasemissionen ergeben, d. h. eine maximale Wirksamkeit der Abgasnachbehandlung vorliegt, wenn ein Betrieb der Brennkraftmaschine 1 mit einem Verbrennungsluftverhältnis bzw. mit einem um einen Mittelwert eines Verbrennungsluftverhältnisses schwankenden Verbrennungsluftverhältnis erfolgt, das in Abhängigkeit der in Figur 5 gezeigten Funktion bestimmt wird und das nicht dem Maximum dieser Funktion entspricht. Vielmehr ist die Abgasnachbehandlung dann besonders wirksam, wenn eine Phasenverschiebung ϕ, ϕ' in einem Bereich um 80 % des Maximums der in Figur 5 gezeigten Funktion vorliegt, was dann gegeben ist, wenn ein Betrieb der Brennkraftmaschine 1 mit einem Verbrennungsluftverhältnis bzw. mit einem um einen Mittelwert eines Verbrennungsluftverhältnisses schwankenden Verbrennungsluftverhältnis erfolgt, das in Abhängigkeit der in Figur 5 gezeigten Funktion bestimmt wird und das kleiner ist, als 1,0 bzw. im fetten Bereich liegt, d. h. die Brennkraftmaschine 1 wird unterstöchiometrisch betrieben.

Insbesondere wird auf diese Weise der Sollwert des äußeren Regelkreises bestimmt, der oben beschrieben ist, also der Sollwert betreffend das Verbrennungsluftverhältnis (oder eben der Sollwert betreffend den Restsauerstoffgehalt im Abgas stromab des Katalysators 3), in dessen Abhängigkeit die Brennkraftmaschine 1 zumindest mittelbar, d. h. in Verbindung mit dem inneren Regelkreis betrieben wird.

Erfindungsgemäß erfolgt die Bestimmung des Verbrennungsluftverhältnisses bzw. die Bestimmung des vorgenannten Sollwertes des äußeren Regelkreises in gewissen Abständen. Insbesondere erfolgt diese Bestimmung in regelmäßigen Abständen, insbesondere alle 24 Betriebsstunden der Brennkraftmaschine 1.

Zusammengefasst können erfindungsgemäß die Nachteile gemäß dem Stand der Technik überwunden werden. Vor allem können anhand des erfindungsgemäßen Verfahrens Streuungen der Parameter des zweiten Abgassensors 5, also insbesondere eine Parameterdrift einer stromab des Katalysators 3 angeordneten Lambdasonde (beispielsweise ein Spannungsoffset), die sonst das Abgasverhalten negativ beeinflussen, kompensiert werden, da eine selbsttätige Justierung des Sollwertes für das Verbrennungsluftverhältnis vorgenommen werden kann.

Insbesondere entspricht die erfindungsgemäße Vorrichtung zum Betreiben einer Brennkraftmaschine 1 mit einer Abgasnachbehandlung einem Computer mit einer CPU und einem maschinenlesbaren Speichermedium, der zur Durchführung des erfindungsgemäßen Verfahrens hergerichtet ist, wobei auf dem Speichermedium ein Computerprogramm gespeichert ist, das alle Schritte des erfindungsgemäßen Verfahrens umfasst, wobei das Computerprogramm mittels der CPU ausgeführt wird. Praktisch handelt es sich dabei um das genannte Steuergerät, das bekanntermaßen das Zusammenwirken sämtlicher Sensoren (insbesondere der genannten Abgassensoren 4, 5) und Aktoren (insbesondere der Injektoren zur Zumessung von Kraftstoff bzw. zur Gemischbildung) der Brennkraftmaschine 1 sicherstellt und das eben die zuvor genannten Merkmale aufweist (Computer mit einer CPU, Speichermedium und so weiter).

Erfindungsgemäß wird auch ein Computerprogrammprodukt bereitgestellt, mit einem auf einem maschinenlesbaren Speichermedium gespeicherten Programmcode zur Durchführung des erfindungsgemäßen, oben beschriebenen Verfahrens, wenn das Programm auf einem Computer ausgeführt wird.

## Patentansprüche

1. Verfahren zum Betreiben einer Brennkraftmaschine (1) mit einer Abgasnachbehandlung, umfassend eine Abgasanlage (2) mit einem Katalysator (3), wobei die Brennkraftmaschine (1) derart betrieben wird, dass sich die Sauerstoffkonzentration im Abgas der Brennkraftmaschine (1) wiederholt um einen Mittelwert ändert, wobei beim Betrieb der Brennkraftmaschine (1) mehrere sich wiederholt ändernde Größen für eine Erfassung und Weiterverarbeitung bereitstehen, wobei eine erste Gruppe zumindest eine Größe umfasst, welche die Sauerstoffkonzentration im Abgas der Brennkraftmaschine (1) stromaufwärts des Katalysators (3) entweder beeinflusst oder repräsentiert und eine zweite Gruppe zumindest eine Größe umfasst, welche die Sauerstoffkonzentration im Abgas der Brennkraftmaschine (1) stromabwärts des Katalysators (3) repräsentiert, wobei eine Phasendifferenz (ϕ, ϕ') zwischen einer Größe der ersten Gruppe und einer Größe der zweiten Gruppe bestimmt wird, **dadurch gekennzeichnet, dass** eine Variation des Mittelwertes erfolgt, um den sich die Sauerstoffkonzentration im Abgas wiederholt ändert, wobei für jeden Mittelwert die Phasendifferenz (ϕ, ϕ') bestimmt wird, so dass ein Zusammenhang zwischen dem Mittelwert und der Phasendifferenz (ϕ, ϕ') bereitsteht, wobei der Betrieb der Brennkraftmaschine (1) in Abhängigkeit des Zusammenhanges zwischen dem Mittelwert und der Phasendifferenz (ϕ, ϕ') erfolgt, wobei der Zusammenhang zwischen dem Mittelwert und der Phasendifferenz (ϕ, ϕ') die Phasendifferenz (ϕ, ϕ') als Funktion des Verbrennungsluftverhältnisses beschreibt, mit dem die Brennkraftmaschine (1) im Mittel betrieben wird, wobei diese Funktion ein Maximum aufweist und der Betrieb der Brennkraftmaschine (1) in Abhängigkeit dieses Maximums erfolgt, wobei der Betrieb der Brennkraftmaschine (1) in Abhängigkeit dieses Maximums derart erfolgt, dass das Verbrennungsluftverhältnis anhand der Funktion ausgewählt wird und einem Sollwert für einen Regelkreis zur Einstellung des Verbrennungsluftverhältnisses entspricht, mit dem die Brennkraftmaschine (1) zumindest mittelbar betrieben wird, wobei sich der Sollwert an dem Maximum der Phasendifferenz (ϕ, ϕ') orientiert.

2. Verfahren nach Patentanspruch 1, wobei die Brennkraftmaschine (1) zum Zweck einer Steigerung der Wirksamkeit der Abgasnachbehandlung derart betrieben wird, dass sich die Sauerstoffkonzentration im Abgas der Brennkraftmaschine (1) wiederholt um einen Mittelwert ändert.

3. Verfahren nach Patentanspruch 1 oder 2, wobei die Größe der ersten Gruppe, welche die Sauerstoffkonzentration im Abgas der Brennkraftmaschine (1) stromaufwärts des Katalysators (3) beeinflusst, ein Sollwert oder eine Stellgröße einer Regelung des Verbrennungsluftverhältnisses ist, mit dem die Brennkraftmaschine (1) betrieben wird.

4. Verfahren nach Patentanspruch 1 bis 2, wobei die Größe der ersten Gruppe, welche die Sauerstoffkonzentration im Abgas der Brennkraftmaschine (1) stromaufwärts des Katalysators (3) repräsentiert, mittels eines stromauf des Katalysators (3) in der Abgasanlage angeordneten ersten Abgassensors (4) bereitgestellt wird.

5. Verfahren nach Patentanspruch 1 bis 4, wobei die Größe der zweiten Gruppe, welche die Sauerstoffkonzentration im Abgas der Brennkraftmaschine (1) stromabwärts des Katalysators (3) repräsentiert, mittels eines stromab des Katalysators (3) in der Abgasanlage angeordneten zweiten Abgassensors (5) bereitgestellt wird.

6. Verfahren nach Patentanspruch 1 bis 5, wobei die Phasendifferenz (ϕ, ϕ') zwischen einer Größe der ersten Gruppe und einer Größe der zweiten Gruppe dadurch bestimmt wird, dass charakteristische Merkmale des Verlaufes einer Größe der ersten Gruppe und einer Größe der zweiten Gruppe in Beziehung zueinander gesetzt werden, wobei die Bestimmung der Phasendifferenz (ϕ, ϕ') anhand:
- der fallenden oder steigenden Flanken einer Größe der ersten Gruppe und der fallenden oder steigenden Flanken einer Größe der zweiten Gruppe erfolgt oder
- anhand der fallenden oder steigenden Flanken einer Größe der ersten Gruppe und Extremwerten einer Größe der zweiten Gruppe erfolgt oder
- anhand von Extremwerten einer Größe der ersten Gruppe und der fallenden oder steigenden Flanken einer Größe der zweiten Gruppe erfolgt oder
- anhand von Extremwerten einer Größe der ersten Gruppe und Extremwerten einer Größe der zweiten Gruppe erfolgt.

7. Verfahren nach Patentanspruch 5, wobei der Sollwert für einen Regelkreis dem Sollwert des Regelkreises entspricht, bei dem der Istwert das Signal des zweiten Abgassensors (5) ist.

8. Vorrichtung zum Betreiben einer Brennkraftmaschine (1) mit einer Abgasnachbehandlung, **dadurch gekennzeichnet, dass** ein zur Durchführung des Verfahrens nach einem der Ansprüche 1 bis 7 hergerichteter Computer mit einer CPU und einem maschinenlesbaren Speichermedium vorgesehen ist, wobei auf dem Speichermedium ein Computerprogramm gespeichert ist, das die Schritte eines Verfahrens nach einem der Ansprüche 1 bis 7 umfasst, wobei das Computerprogramm mittels der CPU ausgeführt wird.

## Claims

1. Method for operating an internal combustion engine (1) with an exhaust gas after-treatment system comprising an exhaust system (2) with a catalytic converter (3), wherein the internal combustion engine (1) is operated in such a way that the oxygen concentration in the exhaust gas of the internal combustion engine (1) repeatedly changes by a mean value, wherein during the operation of the internal combustion engine (1) a plurality of repeatedly changing variables are available for detection and further processing, wherein a first group comprises at least one variable which influences or represents the oxygen concentration in the exhaust gas of the internal combustion engine (1) upstream of the catalytic converter (3), and a second group comprises at least one variable which represents the oxygen concentration in the exhaust gas of the internal combustion engine (1) downstream of the catalytic converter (3), wherein a phase difference (ϕ, ϕ') between a variable of the first group and a variable of the second group is determined, **characterized in that** the mean value by which the oxygen concentration in the exhaust gas repeatedly changes is varied, wherein the phase difference (ϕ, ϕ') is determined for each mean value, with the result that a relationship between the mean value and the phase difference (ϕ, ϕ') is available, wherein the internal combustion engine (1) is operated as a function of the relationship between the mean value and the phase difference (ϕ, ϕ'), wherein the relationship between the mean value and the phase difference (ϕ, ϕ') describes the phase difference (ϕ, ϕ') as a function of the combustion air ratio with which the internal combustion engine (1) is operated on average, wherein this function has a maximum value, and the internal combustion engine (1) operates as a function of this maximum value, wherein the internal combustion engine (1) operates as a function of this maximum value in such a way that the combustion air ratio is selected on the basis of the function and corresponds to a setpoint value for a control loop for setting the combustion air ratio with which the internal combustion engine (1) is at least indirectly operated, wherein the setpoint value is oriented towards the maximum of the phase difference (ϕ, ϕ').

2. Method according to Patent Claim 1, wherein, in order to increase the effectiveness of the exhaust gas after-treatment, the internal combustion engine (1) is operated in such a way that the oxygen concentration in the exhaust gas of the internal combustion engine (1) repeatedly changes by a mean value.

3. Method according to Patent Claim 1 or 2, wherein the variable of the first group which influences the oxygen concentration in the exhaust gas of the internal combustion engine (1) upstream of the catalytic converter (3) is a setpoint value or a manipulated variable of a control system of the combustion air ratio with which the internal combustion engine (1) is operated.

4. Method according to Patent Claims 1 to 2, wherein the variable of the first group which represents the oxygen concentration in the exhaust gas of the internal combustion engine (1) upstream of the catalytic converter (3) is made available by means of a first exhaust gas sensor (4) which is arranged upstream of the catalytic converter (3) in the exhaust system.

5. Method according to Patent Claims 1 to 4, wherein the variable of the second group which represents the oxygen concentration in the exhaust gas of the internal combustion engine (1) downstream of the catalytic converter (3) is made available by means of a second exhaust gas sensor (5) which is arranged downstream of the catalytic converter (3) in the exhaust system.

6. Method according to Patent Claims 1 to 5, wherein the phase difference (ϕ, ϕ') between a variable of the first group and a variable of the second group is determined by virtue of the fact that characteristic measured values of the profile of a variable of the first group and a variable of the second group are placed in relationship with one another, wherein the phase difference (ϕ, ϕ') is determined on the basis of:
- the falling or rising edges of a variable of the first group and the falling or rising edges of a variable of the second group, or
- on the basis of the falling or rising edges of a variable of the first group and extreme values of a variable of a second group, or
- on the basis of extreme values of a variable of the first group and the falling or rising edges of a variable of the second group, or
- on the basis of extreme values of a variable of the first group and extreme values of a variable of the second group.

7. Method according to Patent Claim 5, wherein the setpoint value for a control loop corresponds to the setpoint value of the control loop at which the actual value is the signal of the second exhaust gas sensor (5).

8. Device for operating an internal combustion engine (1) with an exhaust gas after-treatment system, **characterized in that** a computer which is designed to carry out the method according to one of Claims 1 to 7 and which has a CPU and a machine-readable storage medium is provided, wherein a computer program which comprises the steps of a method according to one of Claims 1 to 7 is stored on the storage medium, wherein the computer program is executed by means of the CPU.

## Revendications

1. Procédé, destiné à faire fonctionner un moteur à combustion interne (1), pourvu d'un post-traitement des gaz d'échappement, comprenant un système d'échappement (2) doté d'un catalyseur (3), le moteur à combustion interne (1) fonctionnant de telle sorte que la concentration d'oxygène dans le gaz d'échappement du moteur à combustion interne (1) varie de manière réitérée d'une valeur moyenne, lors du fonctionnement du moteur à combustion interne (1), plusieurs grandeurs à variation réitérée étant disponibles pour une détection et un traitement ultérieur, un premier groupe comprenant au moins une grandeur qui influence ou représente la concentration d'oxygène dans le gaz d'échappement du moteur à combustion interne (1) en amont du catalyseur (3) et un deuxième groupe comprenant au moins une grandeur, laquelle représente la concentration d'oxygène dans le gaz d'échappement du moteur à combustion interne (1) en aval du catalyseur (3), une différence de phase (ϕ, ϕ') entre une grandeur du premier groupe et une grandeur du deuxième groupe étant déterminée, **caractérisé en ce qu'**il s'effectue une variation de la valeur moyenne de laquelle la concentration d'oxygène dans le gaz d'échappement varie de manière réitérée, pour chaque valeur moyenne, la différence de phase (ϕ, ϕ') étant déterminée de sorte qu'une relation entre la valeur moyenne et la différence de phase (ϕ, ϕ') soit disponible, le fonctionnement du moteur à combustion interne (1) se déroulant en fonction de la relation entre la valeur moyenne et la différence de phase (ϕ, ϕ'), la relation entre la valeur moyenne et la différence de phase (ϕ, ϕ') décrivant la différence de phase (ϕ, ϕ') en tant que fonction du taux d'air de combustion auquel le moteur à combustion interne (1) fonctionne en moyenne, ladite fonction présentant un maximum et le fonctionnement du moteur à combustion interne (1) se déroulant en fonction dudit maximum, le fonctionnement du moteur à combustion interne (1) se déroulant en fonction dudit maximum de telle sorte que le taux d'air de combustion soit choisi à l'aide de la fonction et corresponde à une valeur de consigne pour un circuit de réglage destiné à régler le taux d'air de combustion avec lequel le moteur à combustion interne (1) fonctionne au moins indirectement, la valeur de consigne s'axant sur le maximum de la différence de phase (ϕ, (ϕ').

2. Procédé selon la revendication 1, en vue d'augmenter l'efficacité du post-traitement des gaz d'échappement, le moteur à combustion interne (1) fonctionnant de telle sorte que la concentration d'oxygène dans le gaz d'échappement du moteur à combustion interne (1) varie de manière réitérée d'une valeur moyenne.

3. Procédé selon la revendication 1 ou 2, la grandeur du premier groupe, laquelle influence la concentration d'oxygène dans le gaz d'échappement du moteur à combustion interne (1) en amont du catalyseur (3) étant une valeur de consigne ou une grandeur de réglage d'une régulation du taux d'air de combustion avec lequel le moteur à combustion interne (1) fonctionne.

4. Procédé selon les revendications 1 et 2, la grandeur du premier groupe, laquelle représente la concentration d'oxygène dans le gaz d'échappement du moteur à combustion interne (1) en amont du catalyseur (3) étant mise à disposition au moyen d'un premier capteur des gaz d'échappement (4) placé dans le système d'échappement en amont du catalyseur (3).

5. Procédé selon les revendications 1 à 4, la grandeur du deuxième groupe, laquelle représente la concentration d'oxygène dans le gaz d'échappement du moteur à combustion interne (1) en aval du catalyseur (3) étant mise à disposition au moyen d'un deuxième capteur des gaz d'échappement (5) placé dans le système d'échappement en aval du catalyseur (3).

6. Procédé selon les revendications 1 à 5, la différence de phase (ϕ, (ϕ') entre une grandeur du premier groupe et une grandeur du deuxième groupe étant déterminée en ce que des attributs caractéristiques de la courbe d'une grandeur du premier groupe et d'une grandeur du deuxième groupe soient mis en relation réciproque, la détermination de la différence de phase (ϕ, ϕ') ayant lieu à l'aide :
- des flancs descendants ou ascendants d'une grandeur du premier groupe et des flancs descendants ou ascendants d'une grandeur du deuxième groupe ou
- à l'aide des flancs descendants ou ascendants d'une grandeur du premier groupe et de valeurs extrêmes d'une grandeur du deuxième groupe ou
- à l'aide de valeurs extrêmes d'une grandeur du premier groupe et des flancs descendants ou ascendants d'une grandeur du deuxième groupe ou
- à l'aide de valeurs extrêmes d'une grandeur du premier groupe et de valeurs extrêmes d'une grandeur du deuxième groupe.

7. Procédé selon la revendication 5, la valeur de consigne pour un circuit de réglage correspondant à la valeur de consigne du circuit de réglage sur lequel la valeur réelle est le signal du deuxième capteur des gaz d'échappement (5).

8. Dispositif, destiné à faire fonctionner un moteur à combustion interne (1) pourvu d'un post-traitement des gaz d'échappement, **caractérisé en ce qu'**il est prévu un ordinateur constitué pour réaliser le procédé selon l'une quelconque des revendications 1 à 7, doté d'une CPU et d'un support de stockage lisible par informatique, sur le support de stockage étant mémorisé un programme informatique qui comprend les étapes d'un procédé selon l'une quelconque des revendications 1 à 7, le programme informatique étant exécuté par la CPU.
